# EUROPÄISCHE PATENTANMELDUNG

(11) **EP 4 822 267 A1**
(43) Veröffentlichungstag der Anmeldung: **14.10.2026**
(21) Anmeldenummer: 26167289.3
(22) Anmeldetag: 24.03.2026
(51) Int. Cl.: F24S 25/634, F24S 25/61, F24S 25/636, H02S 20/23, F24S 25/60

(54) **BEFESTIGUNGSVORRICHTUNG**

(30) Priorität: 10.04.2025 DE 102025114271
(71) Anmelder: SL Rack GmbH, 83527 Haag (DE)
(72) Erfinder: Schletter, Ludwig, 83527 Haag i. OB (DE)
(74) Vertreter: Lichtnecker, Markus Christoph

(57) **Zusammenfassung**

Die Erfindung betrifft eine Befestigungsvorrichtung zum Befestigen eines, vorzugsweise rahmenlosen, Dünnschichtsolar- und/oder Dünnschichtphotovoltaikmoduls an einer Tragschiene, aufweisend eine Basis mit wenigstens einer Auflage zum Auflegen des Moduls, eine Klemmvorrichtung mit einem Klemmabschnitt, wobei die Klemmvorrichtung derart relativ zur Basis verstellbar ist, dass das Modul zwischen der Auflage und dem Klemmabschnitt einklemmbar ist, wobei die Auflage und/oder der Klemmabschnitt eine Gummierung aufweist, eine Fixiervorrichtung zum Fixieren der Klemmvorrichtung, und eine Montagekralle, die mit der Fixiervorrichtung verbunden oder verbindbar ist.

## Beschreibung

Die Erfindung betrifft eine Befestigungsvorrichtung zum Befestigen eines Moduls.

Nachteilig bei bisherigen Befestigungsvorrichtungen ist, dass diese lediglich für dicke Solar- und/oder Photovoltaikmodule geeignet sind. Würde man hingegen versuchen, Dünnschichtsolar- und/oder Dünnschichtphotovoltaikmodule mithilfe dieser Befestigungsvorrichtungen zu befestigen, könnten Beschädigungen auftreten. Auch gestaltet sich die Montage häufig komplex.

Es ist daher eine Aufgabe der Erfindung, eine Befestigungsvorrichtung sowie ein System zu schaffen, welche/s eine einfache Befestigung eines Dünnschichtsolar- und/oder Dünnschichtphotovoltaikmoduls ermöglicht.

Die Lösung dieser Aufgabe erfolgt durch die Gegenstände der unabhängigen Ansprüche.

Erfindungsgemäß ist die Befestigungsvorrichtung, welche z.B. als Laminatklemme bezeichnet werden kann, zum Befestigen eines, vorzugsweise rahmenlosen, Dünnschichtsolar- und/oder Dünnschichtphotovoltaikmoduls an einer Tragschiene, welche auch als Montageschiene bezeichnet werden kann, ausgebildet und/oder kann hierzu verwendet werden.

Die Dicke der Dünnschichtsolar- und/oder Dünnschichtphotovoltaikmodule kann beispielsweise zwischen 3 mm bis 20 mm betragen.

Beispielsweise können die Tragschienen mittels Dachhaken an einem Dach befestigt werden bzw. befestigt sein. Bei dem Dach kann es sich beispielsweise um ein Schrägdach handeln.

Die Befestigung des Dünnschichtsolar- und/oder Dünnschichtphotovoltaikmoduls an der Tragschiene erfolgt dann über die Befestigungsvorrichtung.

Schutz wird sowohl für den montierten Zustand (auf dem Dach) als auch den unmontierten Zustand beansprucht.

Die Befestigungsvorrichtung weist eine Basis mit wenigstens einer Auflage zum Auflegen des Moduls, also des Dünnschichtsolar- und/oder Dünnschichtphotovoltaikmoduls, auf.

Beispielweise kann die Basis im montierten Zustand auf der Tragschiene aufliegen, in diese eingreifen und/oder daran fixiert sein.

Ferner weist die Befestigungsvorrichtung eine Klemmvorrichtung mit einem Klemmabschnitt auf.

Die Klemmvorrichtung ist derart relativ zur Basis verstellbar, dass das Modul zwischen der Auflage und dem Klemmabschnitt einklemmbar ist bzw. eingeklemmt ist.

Vorzugsweise kann die Basis und/oder die Klemmvorrichtung ein Metallmaterial, vorzugsweise Aluminium und/oder (Edel)Stahl, aufweisen oder daraus bestehen.

Die Auflage und/oder der Klemmabschnitt weist eine Gummierung auf. Die Gummierung kann dafür sorgen, dass das eingeklemmte Modul nicht beschädigt wird. Zudem erhöht die Gummierung die Reibung, sodass ein sicherer Halt des Moduls gewährleistet wird.

Ferner weist die Befestigungsvorrichtung eine Fixiervorrichtung zum Fixieren der Klemmvorrichtung, z.B. an der Basis, auf.

Vorzugsweise ist die Fixierungsvorrichtung zentral angeordnet. Beispielsweise kann die Fixierungsvorrichtung sowohl die Klemmvorrichtung als auch die Basis durchdringen.

Die Fixierungsvorrichtung verhindert, dass sich das Modul ungewollt aus der Befestigungsvorrichtung löst.

Schließlich weist die Befestigungsvorrichtung eine Montagekralle auf, die mit der Fixiervorrichtung verbunden, z.B. verschraubt, oder verbindbar, z.B. verschraubbar, ist.

Die Montagekralle kann beispielsweise ein Rastende aufweisen. Das Rastende kann in eine Tragschiene eingedrückt werden. Rein optional kann sich die Montagekralle beim Einschrauben der Schraube aufspreizen. Das Rastende ermöglicht eine positionsunabhängige Montage an der Tragschiene.

Die Montagekralle dient beispielsweise zur Befestigung an der Tragschiene.

Die Befestigungsvorrichtung ist vorzugsweise vormontiert. So kann z.B. die Fixiervorrichtung mit der Montagekralle verbunden sein. Dadurch wird die Montage auf dem Dach vereinfacht.

Ferner ist die Befestigungsvorrichtung bevorzugt für unterschiedliche Tragschienen geeignet. Die Befestigungsvorrichtung ist somit vielseitig einsetzbar.

Weiterbildungen der Erfindung sind auch den abhängigen Ansprüchen, der Beschreibung sowie den beigefügten Zeichnungen zu entnehmen.

Gemäß einer Ausführungsform weist die Fixiervorrichtung eine Schraube auf oder ist als Schraube ausgebildet.

Durch die Schraube kann die Befestigungsvorrichtung bequem von oben verschraubt werden, wodurch die Montage erheblich erleichtert wird.

Die Klemmvorrichtung kann unmittelbar über die Fixiervorrichtung mit der Basis verschraubt werden. Alternativ ist eine mittelbare Befestigung über die Tragschiene denkbar. In diesem Fall wird die Fixiervorrichtung über die Montagekralle an der Tragschiene befestigt. Dabei wird die Klemmvorrichtung an die Basis gedrückt und fixiert.

Nach einer weiteren Ausführungsform weist die Gummierung ein Ethylen-Propylen-Dien-Kautschuk (EPDM) Material auf oder besteht daraus.

Das EPDM-Material sorgt für eine stabile und/oder schonende Befestigung der Module.

Ferner sorgt das EPDM-Material für eine lange Lebensdauer.

Gemäß einer weiteren Ausführungsform weist die Gummierung eine Riffelung auf.

Bevorzugt ist die Riffelung an der dem Modul zugewandten Seite vorgesehen. Beispielsweise kann diese Seite vollständig geriffelt sein.

Die Riffelung kann vorzugsweise wellenförmig, sägezahnförmig und/oder rechteckförmig ausgebildet sein.

Die Riffelung sorgt für eine stabile und/oder schonende Befestigung der Module.

Nach einer weiteren Ausführungsform ist die Gummierung der Auflage L-förmig ausgebildet.

Das Modul kann somit an einem Schenkel aufliegen. Der andere Schenkel kann einen seitlichen Anschlag für das Modul bilden.

Alternativ oder zusätzlich kann die Gummierung des Klemmabschnitts L-förmig ausgebildet sein. So kann der Klemmabschnitt einen seitlichen Anschlag für das Modul bilden.

Ein seitlicher Anschlag verhindert die Gefahr von Beschädigungen.

Es ist jedoch ebenso möglich, dass die Gummierung der Auflage und/oder die Gummierung des Klemmabschnitts eine ebene Fläche bilden. Die Gummierung kann in diesem Fall plattenförmig ausgebildet sein.

Gemäß einer weiteren Ausführungsform weist die Gummierung eine Rastnase auf.

Die Rastnase kann sich vorzugsweise über die gesamte Länge der Gummierung erstrecken.

Vorzugsweise weist die Basis im Bereich der Auflage und/oder die Klemmvorrichtung im Bereich des Klemmabschnitts eine hinterschnittene Einbuchtung für die Rastnase auf.

Die Einbuchtung kann an die Form der Rastnase angepasst sein. Vorzugsweise erstreckt sich die Einbuchtung über die gesamte Länge der Basis, z.B. der Auflage, bzw. der Klemmvorrichtung, z.B. des Klemmabschnitts.

Beispielsweise kann die Gummierung durch die Rastnase einen Andrückgummi bilden, d.h. die Gummierung kann auf einfache Weise in die Einbuchtung der Basis und/oder der Klemmvorrichtung eingedrückt und somit befestigt werden. Dies ermöglicht eine schnelle und/oder einfache (Vor-)Montage.

Nach einer weiteren Ausführungsform weist die Montagekralle eine Verdrehsicherung auf.

Die Montagekralle kann vorzugsweise relativ zur Basis verstellt werden. Die Verdrehsicherung schränkt die Freiheitsgrade der Bewegung hierbei ein. So kann die Montagekralle aufgrund der Verdrehsicherung bevorzugt lediglich in vertikaler Richtung bewegt werden.

Dadurch, dass ein Verdrehen unterbunden wird, erleichtert sich die Montage.

Gemäß einer weiteren Ausführungsform weist die Verdrehsicherung zumindest abschnittsweise eine eckige Kontur auf.

Die Querschnittsfläche ist somit nicht vollständig rund.

Durch die eckige Kontur wird ein Verdrehen zuverlässig verhindert.

Nach einer weiteren Ausführungsform weist die Verdrehsicherung eine rechteckige, vorzugsweise quadratische, Kontur auf.

Beispielsweise kann die Verdrehsicherung als Vierkant ausgebildet sein.

Eine derartige Kontur lässt sich auf einfache Weise herstellen. Zudem wird dadurch ein Verdrehen zuverlässig verhindert.

Gemäß einer weiteren Ausführungsform weist die Basis eine, vorzugsweise passgenaue, Aussparung für die Verdrehsicherung auf.

Die Aussparung dient gewissermaßen als Gegenanschlag für die Verdrehsicherung.

Beispielsweise kann die Aussparung zumindest abschnittsweise eine eckige Querschnittsfläche aufweisen.

Vorzugsweise ist die Querschnittsfläche rechteckig, z.B. quadratisch.

Die Aussparung kann größer als die Verdrehsicherung sein. So kann die Verdrehsicherung durch die Aussparung hindurch geführt werden.

Nach einer weiteren Ausführungsform beträgt die Länge der Auflage und/oder des Klemmabschnitts mindestens 5 cm, vorzugsweise mindestens 7 cm.

Vorzugsweise ist die Auflage und/oder der Klemmabschnitts genauso lang wie die Basis bzw. die Klemmvorrichtung.

Das Modul wird somit an einem vergleichsweise großen Bereich festgeklemmt. Die lange Klemmlänge sorgt für eine stabile und/oder schonende Befestigung des Moduls.

Gemäß einer weiteren Ausführungsform sind genau eine Auflage und genau ein Klemmabschnitt vorgesehen.

Entsprechende Befestigungsvorrichtungen eignen sich für Randbereiche auf dem Dach. Hierbei wird lediglich auf einer Seite der Befestigungsvorrichtung ein Modul aufgenommen.

Nach einer alternativen Ausführungsform sind zwei Auflagen und zwei Klemmabschnitte vorgesehen, welche bezüglich der Fixiervorrichtung an gegenüberliegenden Seiten angeordnet sind.

Entsprechende Befestigungsvorrichtungen eignen sich für Mittelbereiche auf dem Dach. Hierbei kann an den beiden gegenüberliegenden Seiten der Befestigungsvorrichtung jeweils ein Modul aufgenommen werden.

Vorzugsweise ist die Befestigungsvorrichtung achsensymmetrisch ausgebildet. Somit ist die Orientierung bei Befestigung egal, sodass die Montage vereinfacht wird.

Die Erfindung betrifft auch ein System mit einer erfindungsgemäßen Befestigungsvorrichtung und wenigstens einem, vorzugsweise rahmenlosen, Dünnschichtsolar- und/oder Dünnschichtphotovoltaikmodul.

Vorzugsweise weist das System genau ein Modul oder genau zwei oder mehr Module auf.

Beispielsweise kann auch wenigstens oder genau eine Tragschiene und/oder wenigstens oder genau ein Dachhaken ein Bestandteil des Systems sein.

Das Systems kann im montierten Zustand (auf dem Dach) oder im unmontierten Zustand vorliegen.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit jedem Gegenstand der unabhängigen Ansprüche kombiniert werden.

Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englisch übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Befestigungsvorrichtung,
- Fig. 2: eine Schnittansicht der Befestigungsvorrichtung gemäß Fig. 1,
- Fig. 3: eine weitere Schnittansicht der Befestigungsvorrichtung gemäß Fig. 1,
- Fig. 4: eine weitere Perspektivansicht der Befestigungsvorrichtung gemäß Fig. 1,
- Fig. 5: eine Perspektivansicht einer weiteren Ausführungsform einer erfindungsgemäßen Befestigungsvorrichtung,
- Fig. 6: eine Schnittansicht der Befestigungsvorrichtung gemäß Fig. 5,
- Fig. 7: eine weitere Schnittansicht der Befestigungsvorrichtung gemäß Fig. 5, und
- Fig. 8: eine weitere Perspektivansicht der Befestigungsvorrichtung gemäß Fig. 5.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Die Anzahl, Länge und/oder Form der Gummierungen ist grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

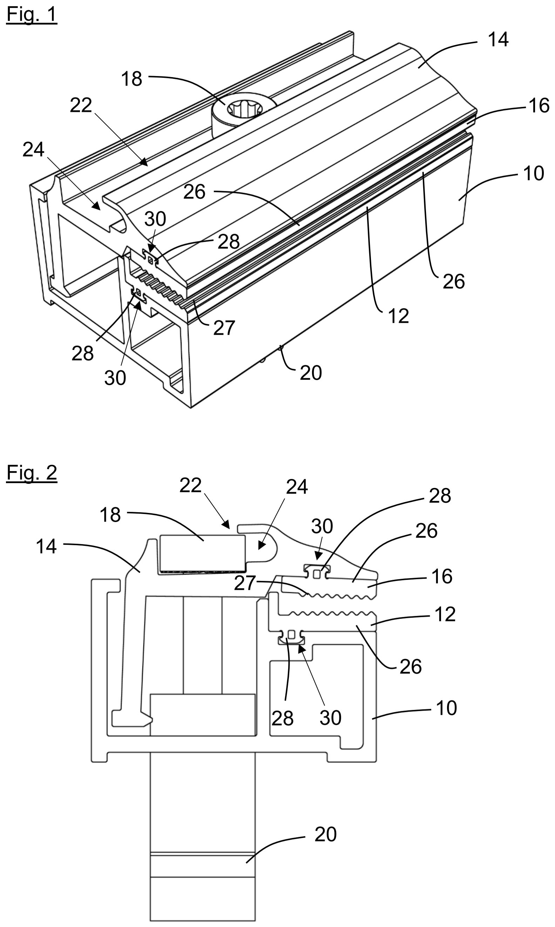

Fig. 1 und 2 zeigen eine Befestigungsvorrichtung zum Befestigen eines (nicht dargestellten) Dünnschichtsolar- und/oder Dünnschichtphotovoltaikmoduls an einer (nicht dargestellten) Tragschiene.

Die Befestigungsvorrichtung weist eine Basis 10 mit einer Auflage 12 zum Auflegen des Moduls auf.

Ferner weist die Befestigungsvorrichtung eine Klemmvorrichtung 14 mit einem Klemmabschnitt 16 auf.

Die Klemmvorrichtung 14 kann, vorzugsweise in vertikaler Richtung, derart relativ zur Basis 10 verstellt werden, dass das Modul zwischen der Auflage 12 und dem Klemmabschnitt 16 eingeklemmt werden kann.

Über eine, z.B. als Schraube 18 ausgebildete, Fixiervorrichtung kann die Klemmvorrichtung 14 in der gewünschten Position an der Basis 10 fixiert werden.

Die Fixiervorrichtung 18 ist mit einer Montagekralle 20 verbunden, z.B. verschraubt, und/oder greift in die Montagekralle 20 ein. Optional kann sich die Montagekralle 20 beim Einschrauben der Fixiervorrichtung 18 aufspreizen. Über die Montagekralle 20 kann die Befestigungsvorrichtung an der Tragschiene befestigt werden.

Bevorzugt ist die Fixiervorrichtung 18 in einer Nut 22 der Klemmvorrichtung 14 angeordnet. Die Nut 22 kann sich zum Beispiel über die gesamt Länge der Klemmvorrichtung 14 erstrecken. Die Fixiervorrichtung 18 ist in der Nut 22 geschützt.

Beispielsweise wird bei der Vormontage die Fixiervorrichtung 18 eingesetzt. Dann werden die Schenkel der Nut 22 über der Fixiervorrichtung 18 zusammengebogen. Die Fixiervorrichtung 18 kann sich daher nicht von selbst lösen.

Beispielsweise kann die Nut 22 eine oder zwei Hinterschneidungen 24 aufweisen.

Die Fixiervorrichtung 18 kann auch die Verstellrichtung festlegen und beispielsweise ein Verstellen in horizontaler Richtung verhindern. So kann die Klemmvorrichtung 14 beispielsweise lediglich nach oben und unten verstellt werden, um so den Abstand zwischen der Auflage 12 und dem Klemmabschnitt 16 einzustellen.

Die Auflage 12 und der Klemmabschnitt 16 weisen jeweils eine Gummierung 26 mit einer optionalen Riffelung 27 auf.

Die Gummierung 26 der Auflage 12 kann eine L-förmige Querschnittsfläche aufweisen.

An den Gummierungen 26 sind optionale Rastnasen 28 ausgebildet, welche in hinterschnittene Einbuchtungen 30 der Basis 10 und der Klemmvorrichtung 14 eingedrückt sind.

Die Befestigungsvorrichtung ist als Endklemme ausgebildet, d.h. es kann lediglich ein Modul daran befestigt werden.

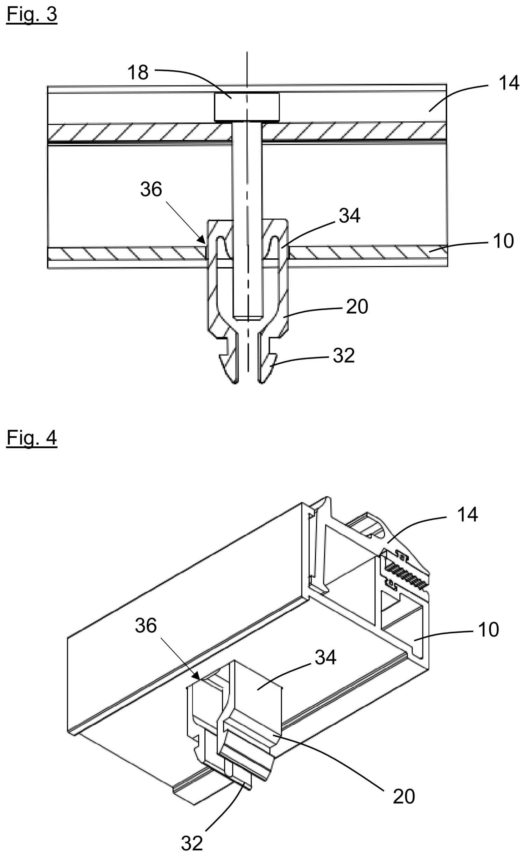

Wie in Fig. 3 und 4 zu sehen ist, kann die Montagekralle 20 ein Rastende 32 aufweisen. Das Rastende 32 kann an einer beliebigen Position in eine Tragschiene eingedrückt werden.

Ferner weist die Montagekralle 20 an einem vom Rastende 32 abgewandten Endbereich eine Verdrehsicherung 34 auf. Beispielsweise kann die Verdrehsicherung 34 eine rechteckförmige Kontur aufweisen.

Die Verdrehsicherung 34 ist durch eine, beispielsweise rechteckförmige, Aussparung 36 der Basis 10 geführt. Ein Verdrehen wird auf diese Weise zuverlässig verhindert.

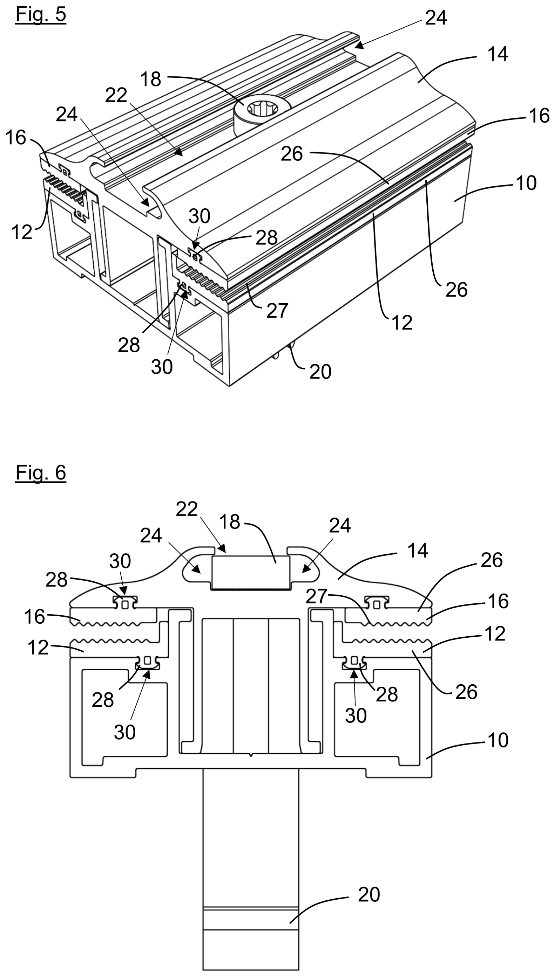

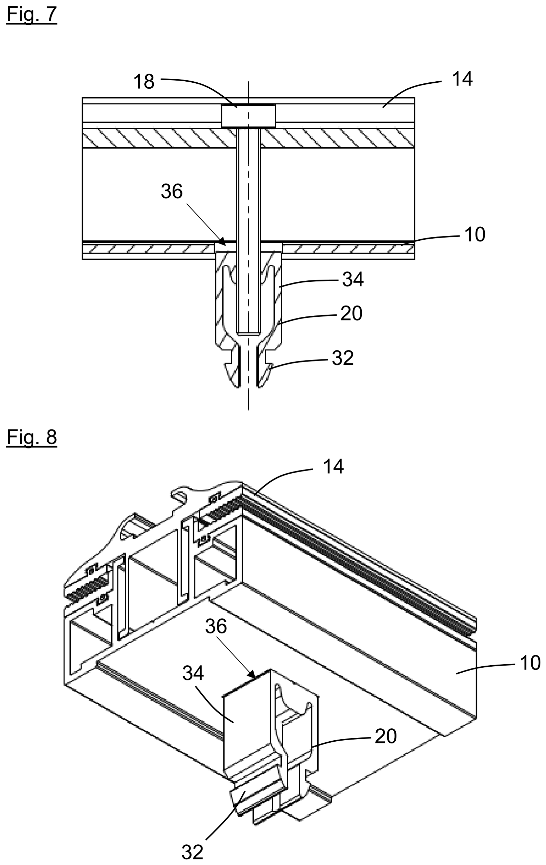

In den Fig. 5 bis 8 ist die Befestigungsvorrichtung hingegen als Mittelklemme ausgebildet, d.h. Module können an zwei bezüglich der Fixiervorrichtung 18 gegenüberliegenden Seiten befestigt werden.

Die Nut 22 weist in diesem Fall zwei Hinterschneidungen 24 auf, welche sich bevorzugt über die gesamte Länge der Klemmvorrichtung 14 erstrecken.

### Bezugszeichenliste

- 10: Basis
- 12: Auflage
- 14: Klemmvorrichtung
- 16: Klemmabschnitt
- 18: Schraube, Fixiervorrichtung
- 20: Montagekralle
- 22: Nut
- 24: Hinterschneidung
- 26: Gummierung
- 27: Riffelung
- 28: Rastnase
- 30: Einbuchtung
- 32: Rastende
- 34: Verdrehsicherung
- 36: Aussparung

## Patentansprüche

1. Befestigungsvorrichtung zum Befestigen eines, vorzugsweise rahmenlosen, Dünnschichtsolar- und/oder Dünnschichtphotovoltaikmoduls an einer Tragschiene, aufweisend
eine Basis (10) mit wenigstens einer Auflage (12) zum Auflegen des Moduls,
eine Klemmvorrichtung (14) mit einem Klemmabschnitt (16), wobei die Klemmvorrichtung (14) derart relativ zur Basis (10) verstellbar ist, dass das Modul zwischen der Auflage (12) und dem Klemmabschnitt (16) einklemmbar ist, wobei
die Auflage (12) und/oder der Klemmabschnitt (16) eine Gummierung (26) aufweist,
eine Fixiervorrichtung (18) zum Fixieren der Klemmvorrichtung (14), und eine Montagekralle (20), die mit der Fixiervorrichtung (18) verbunden oder verbindbar ist.

2. Befestigungsvorrichtung nach Anspruch 1,
**dadurch gekennzeichnet,**
**dass** die Fixiervorrichtung eine Schraube (18) aufweist oder als Schraube (18) ausgebildet ist.

3. Befestigungsvorrichtung nach Anspruch 1 oder 2,
**dadurch gekennzeichnet**,
die Montagekralle (20) eine Verdrehsicherung (34) aufweist.

4. Befestigungsvorrichtung nach Anspruch 3,
**dadurch gekennzeichnet,**
**dass** die Verdrehsicherung (34) zumindest abschnittsweise eine eckige Kontur aufweist.

5. Befestigungsvorrichtung nach Anspruch 3 oder 4,
**dadurch gekennzeichnet,**
**dass** die Verdrehsicherung (34) eine rechteckige, vorzugsweise quadratische, Kontur aufweist.

6. Befestigungsvorrichtung nach einem der Ansprüche 3 bis 5,
**dadurch gekennzeichnet,**
**dass** die Basis (10) eine, vorzugsweise passgenaue, Aussparung (36) für die Verdrehsicherung (34) aufweist.

7. Befestigungsvorrichtung nach einem der vorhergehenden Ansprüche,
**dadurch gekennzeichnet,**
**dass** die Länge der Auflage (12) und/oder des Klemmabschnitts (16) mindestens 5 cm, vorzugsweise mindestens 7 cm, beträgt.

8. Befestigungsvorrichtung nach einem der vorhergehenden Ansprüche,
**dadurch gekennzeichnet,**
**dass** genau eine Auflage (12) und genau ein Klemmabschnitt (16) vorgesehen sind.

9. Befestigungsvorrichtung nach einem der Ansprüche 1 bis 7,
**dadurch gekennzeichnet,**
**dass** zwei Auflagen (12) und zwei Klemmabschnitte (16) vorgesehen sind, welche bezüglich der Fixiervorrichtung (18) an gegenüberliegenden Seiten angeordnet sind.

10. System mit einer Befestigungsvorrichtung nach einem der vorhergehenden Ansprüche und wenigstens einem, vorzugsweise rahmenlosen, Dünnschichtsolar- und/oder Dünnschichtphotovoltaikmodul.
